# EUROPÄISCHE PATENTANMELDUNG

(11) **EP 3 281 920 A1**
(43) Veröffentlichungstag der Anmeldung: **14.02.2018**
(21) Anmeldenummer: 16184064.0
(22) Anmeldetag: 12.08.2016
(51) Int. Cl.: C03B 19/12, C03C 1/00, C03B 8/02, C03B 20/00

(54) **KONTINUIERLICHES SOL-GEL-VERFAHREN ZUR HERSTELLUNG VON SILICATHALTIGEN GLÄSERN ODER GLASKERAMIKEN**

(71) Anmelder: D. Swarovski KG, 6112 Wattens (AT)
(72) Erfinder: CZERMAK, Georg, 6112 Wattens (AT); GANDER, Matthias, 6500 Landeck (AT); STREITER, Christina, 6112 Wattens (AT); GABL, Christian, 6175 Kematen (AT); LIPP, Christian, 6134 Vomp (AT); HOWELL, Roy Layne, Gainesville, FL 32653 (US); STEPANIK, Nina, 9640 Kötschach-Mauthen (AT)
(74) Vertreter: dompatent von Kreisler Selting Werner - Partnerschaft von Patent- und Rechtsanwälten mbB

(57) **Zusammenfassung**

Vorgeschlagen wird ein kontinuierliches Sol-Gel-Verfahren zur Herstellung von silicathaltigen Gläsern und Glaskeramiken, umfassend die folgenden Schritte:
(a) kontinuierliches Eindosieren eines Siliciumtetraalkoxids, eines Siliciumalkoxids mit wenigstens einer nicht alkoholischen funktionellen Gruppe und eines Alkohols in einen ersten Reaktor (R1) sowie wenigstens anteilige Hydrolyse durch Zugabe einer Mineralsäure unter Erhalt eines ersten Produktstroms (A);
(b) kontinuierliche Bereitstellung eines zweiten Produktstroms (B), in einem zweiten Reaktor (R2), durch Eindosieren einer Metallalkoxidkomponente oder kontinuierliches Vermischen eines Alkohols und einer Metallalkoxidkomponente;
(c) kontinuierliches Vermischen der Produktströme (A) und (B) in einem dritten Reaktor (R3) zur Erzeugung eines Präsols unter Erhalt eines dritten Produktstroms (C);
(d) kontinuierliche Zugabe von Wasser oder einer verdünnten Säure zum Produktstrom (C) unter Erhalt eines Sols (Gelierung);
(e) kontinuierliches Abfüllen des austretenden Sols in Formen unter Erhalt eines Aquagels;
(f) Trocknen der Aquagele unter Erhalt von Xerogelen;
(g) Sinterung der Xerogele unter Erhalt von silicathaltigen Gläsern oder silicathaltigen Glaskeramiken.

## Beschreibung

### GEBIET DER ERFINDUNG

Die Erfindung befindet sich auf dem Gebiet der anorganischen Chemie und betrifft ein kontinuierliches Verfahren zur Herstellung von silicathaltigem Gläsern oder Glaskeramiken.

### STAND DER TECHNIK

Dreidimensionale Quarzglaskörper können nach dem so genannten Sol-Gel-Verfahren hergestellt werden. Das Prinzip dieses Verfahrens beruht auf einer sauer oder basisch katalysierten Hydrolyse und dem anschließenden Gelieren durch Kondensationsreaktionen. Dabei geht das ursprünglich flüssige Sol über eine stabile flüssige Dispersion von Oxidpartikeln in einen gelartigen und schließlich in den festen Zustand über. Das so erhaltene Aquagel wird anschließend zum Xerogel getrocknet und zu Quarzglas gesintert. Das Endprodukt ist glasartig. Porosität und Morphologie der Produkte können durch die Zugabe verschiedener Additive oder über das Trocknungsregime eingestellt werden. Im Gegensatz zur herkömmlichen Quarzglasherstellung durch Schmelzen der Rohstoffe bei sehr hohen Temperaturen findet die Formgebung beim Sol-Gel-Verfahren bei Raumtemperatur statt. Die mit dieser Technik hergestellten Glaskörper müssen in der Regel nicht mehr nachbearbeitet werden, was sowohl zeiteffizienter als auch kostengünstiger ist.

Edukte einer Sol-Gel-Synthese sind niedermolekulare metallische Alkoxidverbindungen. Den ersten Schritt dieser Synthese stellt die Hydrolyse der Alkoxide in Gegenwart einer Säure oder Base dar. Als Ergebnis dieses Vorgangs entstehen instabile Hydroxyverbindungen (a), die mitunter leicht oligomerisieren können. Die entstandene Lösung ist ein Sol. Einzelne Verbindungen wachsen in einer Kondensationsreaktion durch die Bildung von Siloxanbrücken (Si-O-Si) zusammen (b). Dieser Prozess hält an, bis alle Monomere verbraucht sind. Es bildet sich noch kein zusammenhängendes Netzwerk. Alle entstandenen Teilchen liegen bei geeigneten Reaktionsbedingungen mit einer gleichmäßigen Größenverteilung von wenigen Nanometern vor. Die Reaktionsgeschwindigkeiten von Hydrolyse und Kondensation sind über Medium, pH-Wert und Konzentration beeinflussbar und laufen nebeneinander ab (c). Das Verfahren ist ausführlich von Nogami et al. in Journal of Non-crystalline Solids, 37, S. 191-201 (1980**)** beschrieben worden.

In geeigneter Umgebung ist ein Sol mehrere Wochen, teilweise sogar Monate haltbar. Die Gelierung geschieht durch Kondensation unter Ausbildung von Siloxanbindungen. Hier ist der namensgebende Schritt der Synthese erreicht, der Sol-Gel-Übergang. Aus den losen Teilchen des Sols hat sich ein dreidimensionales Netzwerk gebildet, das mit dem Lösungsmittel durchtränkt ist. Aus dem Sol ist ein Gel geworden.

Nach der erfolgten Gelierung wird das Aquagel zum Xerogel getrocknet. Durch das vollständige Verdampfen des Lösungsmittels entsteht eine stärkere Quervernetzung des gesamten Netzwerkes. Aus diesem Schritt resultiert ein kompaktes, hochvernetztes und widerstandsfähiges Material:
(a) *M*(*OR*)₄ + n H₂O → *M*(O*R*)₄₋ₙ(OH)ₙ + n *R*OH
(b) (O*R*)₃₋ₐ(OH)ₐ*M*-OH + HO-*M*(OR)_{3-b}(OH)_{b} → (O*R*)₃₋ₐ(OH)ₐ*M*-O-M(O*R*)_{3-b}(OH)_{b} + H₂O
(c) (O*R*)_{3-c}(OH)_{c}*M*-O*R* + HO-*M*(O*R*)_{3-b}(OH)_{b} → (O*R*)_{3-c}(OH)_{c}*M*-O-M(O*R*)_{3-b}(OH)_{b} + *R*OH

*M* = Metall oder Halbmetall, *R* = Rest
n=1-4
a = 0-3
b = 0-3
c = 0-3

Im letzten Schritt wird das Xerogel zum Quarzglas gesintert.

Aus dem Stand der Technik ist eine Vielzahl von Verfahren bekannt, die sich mit der Quarzglasherstellung im Allgemeinen und dem Sol-Gel-Verfahren im Besonderen beschäftigen.

Aus dem Europäischen Patent EP 0131057 B1 (SEIKO) ist ein diskontinuierliches Verfahren zur Herstellung von Quarzglas bekannt, bei dem zunächst eine hydrolysierte Lösung eines Metallalkoxides der Formel *M*(O*R*)ₓ bereitgestellt wird, aus der ein Sol (kolloidale Lösung) gebildet wird. Das Sol wird nach dem Gelieren zu einem Xerogel getrocknet. Anschließend wird das Xerogel zum Quarzglas gesintert.

Gemäß dem Europäischen Patent EP 0807610 B1 (LUCENT) wird zur Bildung eines Siliciumdioxid-Sols, welches weitestgehend aus nicht agglomeriertem Siliciumdioxid besteht, ein Verfahren offenbart, bei dem man eine Ausgangsmischung aus Siliciumdioxidteilchen in Wasser herstellt und aus der Mischung durch scherendes Mischen das Siliciumdioxid-Sol bildet. Dem Sol wird zur Einstellung des pH-Wertes von 6 bis 9 eine alkalische Substanz ohne Metallkation zugesetzt.

Das Europäische Patent EP 1251106 B1 (FITEL) beansprucht ein Verfahren, in dem ein Sol durch Mischen von Siliciumdioxidpartikeln und Wasser bereitgestellt wird, wobei die Partikel eine Oberfläche von 5 bis 25 m²/g aufweisen, mindestens 85 % sphärische Teilchen beinhalten und das Gewichtsverhältnis der Partikel zu Wasser größer als 65 % ist. Anschließend wird der pH-Wert auf 10 bis 13 mittels einer Base eingestellt und dem Sol ein Gelierungsmittel zugefügt. Als Base werden Tetramethylammoniumhydroxid und Tetraethylammoniumhydroxid verwendet.

Aus der Europäischen Patentanmeldung EP 1258457 A1 (DEGUSSA) ist ein Verfahren bekannt, bei dem ein Siliciumalkoxid hydrolysiert wird, zu welchem man dann Aerosil^{®} Ox50 zugibt, das aufgrund seiner speziellen Eigenschaften, seiner Partikelgröße und sowie seiner Oberfläche eingesetzt wird.

Gegenstand des Europäischen Patentes EP 1320515 B1 (DEGUSSA) ist ein Verfahren bei dem zwei Lösungen hergestellt werden, die zur Reaktion vereinigt werden. Lösung A ist eine wässrige saure Dispersion (pH 1,5) eines pyrogenen Siliciumdioxids (z. B. Aerosil^{®} 0x50), Lösung B dagegen eine wässrige basische Dispersion (pH 10,5-13) eines pyrogenen Siliciumdioxids (z. B. Aerosil^{®} Ox200). Das molare Verhältnis von H₂O zu SiO₂, das molare Verhältnis der Si-Verbindung in Lösung A zu der in Lösung B und der resultierende pH-Wert der Mischung C (nach Vereinigung beider Lösungen) sind die ausschlaggebenden Merkmale, um dreidimensionale Körper, die größer als 2 cm sind zu erhalten.

In der Europäischen Patentanmeldung EP 1606222 A1 (DEGUSSA) wird ein Verfahren beansprucht, bei dem man aus einem Siliciumalkoxid entweder ein Sol oder eine entsprechende Vorstufe herstellt. Anschließend wird das Sol hydrolysiert und dann kolloidales SiO₂ zugefügt.

Gemäß der Europäischen Patentanmeldung EP 1661866 A1 (EVONIK) wird eine wässrige Dispersion aus pyrogenem Siliciumdioxid (kolloidales Siliciumdioxid) vorgelegt, deren pH auf 2 bis 0,5 eingestellt wird, ehe dann TEOS hinzugegeben wird. Das so erhaltene Sol wird anschließend basisch eingestellt und in eine Form gefüllt, wo es zum Gel geliert.

In der Europäischen Patentanmeldung EP 1700830 A1 (DEGUSSA) wird ein Verfahren vorgeschlagen, bei dem zunächst eine wässrige Dispersion aus pyrogenem Metalloxid bereitgestellt wird, zu der ein Metalloxid hinzugegeben wird, das vorher durch die Zugabe von Wasser hydrolysiert wurde. Das auf diesem Weg erhaltene Sol wird anschließend in eine Form gefüllt, in welcher es geliert.

Gegenstand der Europäischen Patentanmeldung EP 1770063 A1 (DYNAX) ist ein Verfahren zur Herstellung von Silica-Aerogelen mit definiertem Porendurchmesser und Porendurchmesserverteilung, bei dem man Siliciumkomponenten, die sowohl hydrolysierbare als auch hydrophobe funktionelle Gruppen enthalten, vorzugsweise Methyltrimethoxysilan in einer sauren, wässrig-tensidischen Lösung hydrolysiert. Als mögliche Lösungsmittel werden nichtionische (z. B. Polyoxyethylenalkylether, Polyoxypropylenalkylether), kationische (Cetyltrimethylammoniumbromid oder -chlorid) oder anionische (Natriumdodecylsulfat) Tenside eingesetzt.

Das Verfahren der Europäischen Patentanmeldung EP 2064159 A1 (DEGUSSA) umfasst die folgende Schritte: Zugabe von pyrogenem SiO₂ zum sauren wässrigen Medium und anschließend Zugabe eines Siliciumalkoxids zur vorgelegten Dispersion. Das molare Verhältnis von Siliciumdioxid zum Siliciumalkoxid soll dabei zwischen 2,5 und 5 liegen. Es handelt sich um ein Batch-Verfahren, in dem zuerst pyrogenes Siliciumdioxid vorgelegt wird und dann das Siliciumalkoxid hinzugefügt wird.

In der Europäischen Patentanmeldung EP 2088128 A1 (DEGUSSA) wird ein Verfahren vorgeschlagen, bei dem pyrogenes SiO₂ sauer eingestelltem Wasser zugesetzt und zur so erhaltenen Dispersion ein Siliciumtetraalkoxid gegeben wird. Der pH-Wert wird neu eingestellt und das Gemisch in einen Container gegeben, wo das Sol zum Gel geliert. Danach wird es zu einem Xerogel getrocknet und zum Glasprodukt gesintert.

Aus der Internationalen Patentanmeldung WO 2013 061104 A2 (DEBRECENI EGYE-TEM) ist ein kontinuierliches Verfahren zur Herstellung von Alcogelen, Aerogelen und Xerogelen bekannt, bei dem man Silane in Gegenwart von basischen Katalysatoren und einem speziellen wässrig-organischen Lösungsmittelsystem sowie einem Gelverzögerer hydrolysiert und in die Lösung inerte Partikel einbringt.

Von Nachteil bei den diskontinuierlichen Verfahren des Standes der Technik ist, dass immer nur definierte diskrete Mengen hergestellt werden können, was zu Qualitätsunterschieden führen kann. Die batchweise Herstellung begünstigt den Einschluss von Luftblasen im Glas, was ebenfalls zu einer Qualitätsminderung führt. Weiterhin nachteilig ist die nach jedem Durchgang erforderliche umfangreiche Reinigung aller Systeme. Zusätzlich bietet ein kontinuierliches Verfahren einfachere Möglichkeiten in Richtung eines Scale-Ups.

Die Aufgabe der vorliegenden Erfindung hat darin bestanden, den oben geschilderten Nachteilen abzuhelfen und darüber hinaus Mehrkomponentengläser und Glaskeramiken mit einem hohen Brechungsindex herzustellen. Eine Möglichkeit dafür besteht darin, die Synthese in einem kontinuierlichen Verfahren durchzuführen und Alkoxidkomponenten zuzudosieren, die zu einer Erhöhung des Brechungsindex führen. Durch die kontinuierliche Reaktionsführung lassen sich beliebige Mengen an silicathaltigen Gläsern und Glaskeramiken hoher und stets gleichbleibender Qualität herstellen.

### BESCHREIBUNG DER ERFINDUNG

Die vorliegende Erfindung betrifft ein kontinuierliches Sol-Gel-Verfahren zur Herstellung von silicathaltigen Gläsern und Glaskeramiken, welches die folgenden Schritte umfasst:
(a) kontinuierliches Eindosieren eines Siliciumtetraalkoxids, eines Siliciumalkoxids mit wenigstens einer nicht alkoholischen funktionellen Gruppe und eines Alkohols in einen ersten Reaktor (R1) sowie wenigstens anteilige Hydrolyse durch Zugabe einer Mineralsäure unter Erhalt eines ersten Produktstroms (A);
(b) kontinuierliche Bereitstellung eines zweiten Produktstroms (B), in einem zweiten Reaktor (R2), durch Eindosieren einer Metallalkoxidkomponente oder kontinuierliches Vermischen eines Alkohols und einer Metallalkoxidkomponente;
(c) kontinuierliches Vermischen der Produktströme (A) und (B) in einem dritten Reaktor (R3) zur Erzeugung eines Präsols unter Erhalt eines dritten Produktstroms (C);
(d) kontinuierliche Zugabe von Wasser oder einer verdünnten Säure zum Produktstrom (C) unter Erhalt eines Sols (Gelierung);
(e) kontinuierliches Abfüllen des austretenden Sols in Formen unter Erhalt eines Aquagels;
(f) Trocknen der Aquagele unter Erhalt von Xerogelen;
(g) Sinterung der Xerogele unter Erhalt von silicathaltigen Gläsern und Glaskeramiken.

Überaschenderweise wurde gefunden, dass das neue kontinuierliche Verfahren die eingangs beschriebenen vielfältigen Probleme alle gleichzeitig und voll umfänglich löst. Abgesehen davon, dass das Verfahren die Herstellung beliebiger und daher auch stets unterschiedlicher Produktmengen erlaubt, führt die Synthese zu Produkten gleichbleibend hoher Qualität

Eine bevorzugte Ausführungsform des erfinderischen Verfahrens besteht ferner darin, die Einsatzstoffe der Synthese im entgasten Zustand zuzuführen. Es hat sich nämlich herausgestellt, dass ohne diesen Schritt infolge veränderter Löslichkeit in den Edukten gelöste Gase durch die Vermischung ausgetrieben werden und zur unerwünschten Blasenbildung Anlass geben können. Die Entgasung kann grundsätzlich in jedem der Verfahrensschritte (a) bis (e) erfolgen, also auf der Stufe der Edukte, des Präsols, einer Dispersion oder des Sols selbst. Vorzugsweise werden bereits die Edukte entgast und in dieser Form in die Synthese eingesetzt. Sicherheitshalber können sowohl die Edukte als auch das Präsol, die Dispersion oder Sol entgast werden.

Die Entgasung wird erfindungsgemäß vorzugsweise mit Ultraschall vorgenommen. Alternativ kommen in Betracht:
- Vakuumentgasung
- Destillation
- Unterdruck/Einfrierzyklen
- Thermische Entgasung
- Chemische Verfahren, wie z.B. Sauerstoffentfernung durch chemische Bindung;
- Gasentfernung mittels Inertgas;
- Zusatz von Entlüftungsadditiven sowie
- Zentrifugieren
oder eine Kombination von zwei oder mehreren dieser Maßnahmen.

Zusätzlich können die Edukte gegebenenfalls durch Verwendung von Ansaugfiltern partikelfrei eingesetzt und jede Form mit frisch hergestelltem Sol befüllt werden. Durch die Vermeidung von nicht spezifikationsgerechter Ausschussware wird somit vor allem die Rentabilität des Verfahrens signifikant gesteigert, zumal lange Reinigungszeiten entfallen, insbesondere da die bevorzugt einzusetzenden Reaktoren leicht mit Spülmedien gereinigt werden können.

Gegenstand der vorliegenden Erfindung sind daher anspruchsgemäße silicathaltige Gläser oder silicathaltige Glaskeramiken sowie Verfahren zu deren Herstellung. Die Verfahrensschritte (a) bis (g) werden im Folgenden näher erläutert.

### Verfahrensschritt A

Siliciumalkoxide, die im Sinne der Erfindung als Ausgangsstoffe für die Herstellung silicathaltiger Gläser oder silicathaltiger Glaskeramiken in Betracht kommen, folgen vorzugsweise der Formel (I)

Si(OR)₄ (I)

in der *R* für einen Alkylrest mit 1 bis 6 Kohlenstoffatomen steht. Typische Beispiele sind Tetrapropylorthosilicat und Tetrabutylorthosilicat, bevorzugt werden jedoch Tetramethylorthosilicat (TMOS) und insbesondere Tetraethylorthosilicat (TEOS) eingesetzt. Da TEOS in Wasser unlöslich ist, kann man in einer bevorzugten Ausführungsform alkoholische, speziell ethanolische Lösungen einsetzen, wobei dem Alkohol die Funktion eines Phasenvermittlers zukommt. Die Siliciumalkoxide können auch weitere Siliciumverbindungen als Additive mitumfassen, wie beispielsweise Methyltriethylsilan, Dimethyldiethylsilan, Trimethylethylsilan, Methyltriethoxysilan (MTES) und dergleichen.
Die saure Hydrolyse der Siliciumalkoxide erfolgt im Reaktor R1 in Gegenwart von Mineralsäuren wie Schwefelsäure, Salpetersäure und Salzsäure oder in Gegenwart von Essigsäure. Die genannten Säuren werden vorzugsweise in wässriger, verdünnter Form zum Einsatz gebracht. Verdünnte Salpetersäure mit einer Konzentration von ca. 1,00 mol/l hat sich als besonders günstig erwiesen. Alternativ eignet sich auch eine wässrige Salzsäure, der gegebenenfalls oberflächenaktive Stoffe zugegeben werden. Die durch die Säure zugesetzte Menge an Wasser wird hier stöchiometrisch zugesetzt, so dass etwa vorzugsweise beim TEOS jeweils nur eine Ethanolatgruppe abgespalten und durch OH⁻ ersetzt wird. Das bevorzugte Volumenverhältnis von Alkoxid zu Mineralsäure ist 1 : 1 bis 20 : 1, besonders bevorzugt 5 : 1 bis 15 : 1 und ganz besonders bevorzugt 7 : 1 bis 12 : 1. Die Hydrolyse wird bei geeigneter Temperatur durchgeführt, indem die beiden Edukte mittels Pumpen gefördert, zusammengeführt und in einem temperierbaren Durchflussreaktor zur Reaktion gebracht werden. Bei Nichtmischbarkeit der Edukte kann sich im Durchflussreaktor ein Slug Flow ausbilden. Vorzugsweise wird ein Alkohol, bevorzugt Ethanol als Phasenvermittler zugesetzt. Der Temperaturbereich der Hydrolyse reicht von 1 bis 100 °C, wobei die bevorzugte Temperatur bei 10 bis 50 °C liegt. Vorzugsweise erfolgt die Hydrolyse bei 18 bis 40 °C und insbesondere bei 20 bis 25 °C.

### Verfahrensschritt B

Metallalkoxidkomponenten, die im Sinne der Erfindung als Ausgangstoffe für die Herstellung der silicathaltigen Gläser oder Glaskeramiken in Betracht kommen, sind vorzugsweise organische Übergangsmetallalkoxide, bevorzugt die der Übergangsmetalle der Gruppen 4-8. Hierbei folgen die Metallalkoxidkomponenten vorzugsweise der Formel *M*(O*R*)ₙ(OH)ₘ, mit *M* = Metall und *R* = Rest (n + m entsprechen der Wertigkeit dieses Kations). Vorzugsweise wird *M* aus den Elementen der 4. Gruppe des PSE ausgewählt, wobei Ti und Zr bevorzugt sind, während *R* vorzugsweise ein organischer Alkylrest mit 1 bis 5 C-Atomen ist, vorzugsweise ausgewählt aus der Gruppe von Ethyl-, Propyl-, Isopropyl-, Butyl-, iso-Butyl-, Pentyl-, isoPentyl- oder neo-Pentylresten. Geeignete Metallalkoxidkomponenten sind vorzugsweise
- Tetraisopropylorthotitanat (Ti[OCH(CH₃)₂]ₐ) oder
- Zirconium(IV)butoxid (Zr(OCH₂CH₂CH₂CH₃)₄).

Die Metallalkoxidkomponente wird im zweiten Verfahrensschritt in einem Reaktor R2 mit Alkohol vermischt. Der Reaktor kann auch temperierbar sein. Alternativ kann aber auch die reine Metallalkoxidkomponente eingesetzt werden. Das bevorzugte Volumenverhältnis von Alkohol zu Metallalkoxidkomponente beträgt vorzugsweise 1 : 5 bis 5 : 1, besonders bevorzugt 2 : 1 bis 1 : 2. Die Temperatur wird bei 0 bis etwa 40 °C, bevorzugt bei 20 bis 30 °C gehalten.

### Verfahrensschritt C

Während im ersten Verfahrensschritt ein erster kontinuierlicher Strom einer hydrolysierten Siliciumalkoxidverbindung hergestellt wurde und im zweiten Schritt ebenfalls kontinuierlich ein zweiter Strom einer alkoholischen Lösung einer zweiten Metallalkoxidkomponente erzeugt wurde, erfolgt im dritten Schritt die Vermischung der beiden Ströme und die Bildung des Präsols. Dazu werden die Produktströme (A) und (B) vor dem Reaktor R3 mittels eines geeigneten Mischsystems zusammengeführt. Die Volumenverhältnisse der beiden Ströme (A) und (B) können variabel eingestellt werden. Dadurch können die Produkteigenschaften des fertigen Glases beeinflusst werden. Bevorzugtes Volumenmischungsverhältnis von (A) zu (B) ist etwa 10 : 1 bis etwa 1 : 10, insbesondere bevorzugt etwa 8 : 1 bis etwa 1 : 5 und ganz besonders bevorzugt etwa 4 : 1 bis etwa 1 : 2. Das Präsol kann hier je nach Qualitätsanspruch des Glases durch geeignete Entgasungsmethoden, beispielsweise durch Ultraschall, entgast werden. Die Zusammenführung der Produktströme (A) und (B) erfolgt bei Temperaturen von 0 bis etwa 100 °C, vorzugsweise bei 0 bis 40 °C, bevorzugt bei 20 bis 30 °C.

### Verfahrensschritt D

Die nachfolgende Gelierung des Präsols wird durch Zugabe von Wasser oder einer Säure bei gleichzeitiger Änderung des pH-Wertes ausgelöst. Hierfür wird dem kontinuierlich hergestellten Präsol (Produktstrom (C)) Wasser oder eine Säure, beispielsweise eine verdünnte Mineralsäure wie Schwefelsäure, Salpetersäure und Salzsäure oder aber eine organische Säure wie Essigsäure (ca. 1,00 mol/l) kontinuierlich zugeführt. Im Verfahrensschritt (D) wird dabei eine entsprechende Stoffmenge an Wasser zugegeben, dass alle verbliebenen Alkoholatreste hydrolysiert werden und anschließend die neu gebildeten Hydroxylgruppen kondensieren. Im Zuge dessen vernetzt sich das System (Gelierung). Damit die Gelzeit hier nicht zu kurz ist, wird vorzugsweise auf 5 bis 0 °C abgekühlt.

Im vorliegenden Verfahrensschritt können diverse Zusätze zugegeben werden, um die Produkteigenschaften zu bestimmen, wie z. B. Zugabe von Kationen, vorzugsweise die der Kationen der Elemente Na, K, Cs, Sr, Ba, B, Al, Zn, Y, La, Ce, Sm, Eu, Tb und Tm oder wenn gefärbte Gläser gewünscht sind die Kationen der Elemente V, Cr, Mn, Fe, Ru, Co, Ni, Cu, Au, Cd, Pr, Nd und Er sowie deren Gemische.

### REAKTOREN

Erfindungsgemäß wird die Reaktion in einem Durchflussreaktor durchgeführt, gegebenenfalls mit vorgeschaltetem Mischelement.

In der einfachsten Ausführungsform handelt es sich bei den Reaktoren um Schläuche aus einem beständigen Material, wie beispielsweise Teflon, Polyamid, Metall, Polyethylen oder Polypropylen, die eine Länge von etwa1 cm bis etwa 1.000 m, vorzugsweise etwa 5 cm bis etwa 500 m und besonders bevorzugt 70 cm bis 400 m sowie im Mittel einen Querschnitt von etwa 1 bis etwa 10 mm, vorzugsweise etwa 1 bis etwa 5 mm aufweisen können. Diese Schläuche können spiralförmig gewunden werden, was den Platzbedarf erheblich reduziert. Die langen Wegstrecken entsprechen bei gegebener Durchflussmenge der jeweils optimalen Reaktionszeit. Solche Anordnungen sind ausgesprochen flexibel, da sich die Schlauchlängen beliebig verlängern oder kürzen lassen und mit geringem Aufwand zu reinigen sind. Eine solche Reaktionsführung kann wesentlich zur Rentabilität des Verfahrens beitragen.

### GELBILDUNG

Das Präsol wird kontinuierlich aus dem Reaktor R3 gefördert und in Formen abgefüllt, in denen die Gelbildung stattfinden kann. Da die auf diese Weise erhaltenen Aquagele während der Alterung in der Form schrumpfen, müssen sie im Behälter leicht gleiten können. Aus diesem Grunde eignen sich hier insbesondere Behälter aus einem hydrophoben Material, wie Polyethylen, Polypropylen, Teflon, PVC oder Polystyrol.

Die erhaltenen Aquagele müssen zwecks Aufbereitung entformt oder innerhalb der Formen zu Xerogelen getrocknet werden. Die Entformung kann unter bestimmten Bedingungen, beispielsweise mit einer alkoholischen Lösung, erfolgen. Die Trocknungsbedingungen werden von den Dampfdrücken der Lösungsmittel im Gel, also der Alkohole, des Wassers und der Säuren, beeinflusst. Durch Einhaltung einer geringen Verdampfungsrate, wird das Gel vor Rissbildungen bewahrt. Lange Trocknungszeiten machen das Verfahren umgekehrt teurer, so dass hier ein Kompromiss gefunden werden muss. Die Trocknung vom Aquagel zum Xerogel erfolgt vorzugsweise bei einem Temperaturgradienten von Raumtemperatur bis 150 °C. Zur Kontrolle der Trocknungsatmosphäre muss die Abdampfrate durch entsprechend dimensionierte Öffnungen und das optionale Vorlegen einer Trocknungslösung eingestellt werden.

### SINTERUNG

Die Sinterung kann in an sich bekannter Weise durchgeführt werden. Während der Sinterung werden die restlichen noch in den Xerogelen enthaltenen Lösungsmittel entfernt und die Poren im System geschlossen. Die Sintertemperatur beträgt bis zu 1400 °C und kann bei den meisten Produkten unter Normalatmosphäre durchgeführt werden. Erfindungsgemäß bevorzugt wird die Sinterung in folgender Weise durchgeführt:
1) Entfernung der verbliebenen Lösungsmittel;
2) Entfernung von enthaltenen unerwünschten organischen Verbindungen;
3) Schließung der vorhandenen Poren unter Bildung von silicathaltigen Gläsern oder Glaskeramiken

Für die Entfernung der Lösungsmittel (1) und unerwünschter organischer Verbindungen, die durch Zersetzung von kohlenstoffhaltigen Edukten/Produkten entstehen (2), wird eine Calcinierung bei Temperaturen im Bereich von etwa 600 bis etwa 1100 °C, vorzugsweise etwa 700 bis etwa 900 °C und besonders bevorzugt etwa 750 bis etwa 850 °C durchgeführt. In Schritt 3 erfolgt die Schließung der Poren durch eine Sinterung bei Temperaturen zwischen etwa 800 bis etwa 1.400 °C, vorzugsweise etwa 850 bis etwa 1.200 °C und besonders bevorzugt bei etwa 950 bis etwa 1.100 °C.

### BEISPIELE

### BEISPIEL 1

### SiO₂/TiO₂-Glas

Über eine erste Pumpe wurde Ethanol, über eine zweite HNO₃ (1,0 mol/l) und über zwei weitere Pumpen TEOS und MTES zur Verfügung gestellt. Die Flüssigkeiten wurden in Schläuchen mit Hilfe von T-Stücken zusammengeführt. Die Mischung wies folgende Zusammensetzung auf:
TEOS 45,0 Vol.-%
MTES 4,5 Vol.-%
EtOH 45,0 Vol.-%
HNO₃ 5,5 Vol.-%

Die Mischung trat bei Raumtemperatur in einen ersten PA-Schlauch (Reaktor R1) ein, der eine Länge von 200 m und einen Innendurchmesser von 2,7 mm aufwies; die Verweilzeit im Schlauch betrug etwa 25 Minuten.

Im zweiten Reaktor wurde eine zweite Metallalkoxidkomponente, vorzugsweise Tetraisopropylorthotitanat, mit einem Alkohol, vorzugsweise Ethanol, gemischt.

Die Produktströme (A) und (B) wurden über ein weiteres T-Stück zusammengeführt und mittels eines statischen Mischrohrs kontinuierlich vermischt. Das Präsol wurde anschließend entgast und nach Zugabe von Wasser sofort in Formen aus PP (2x2x2 cm) abgefüllt und diese dicht verschlossen. Nach etwa 10 Sekunden setzte die Gelierung ein. Nach einer Verweilzeit von neun Tagen in den geschlossenen Formen, wurden die Deckel mit Löchern versehen und die Gelkörper innerhalb der Formen im Verlauf von vier Tagen getrocknet, wobei die Temperatur von Raumtemperatur auf 120 °C erhöht wurde. Die Xerogele wurden anschließend im vorgeheizten Sinterofen über den folgenden Temperaturverlauf zum Glas gesintert: 100 bis 800 °C (7 h), 800 °C (0,5 h), 800 bis 1.030 °C (4,6 h), 1.030 °C (1 h).

Es wurde ein Glas mit einer Zusammensetzung SiO₂/TiO₂ 80/20 (Gew.-%) erhalten.

### BEISPIEL 2

### SiO₂/ZrO₂-Glas

Mit Zirconium(IV)butoxid wurde gemäß dem Verfahren in Beispiel 1 Gläser mit der folgenden Zusammensetzung hergestellt: SiO₂/ZrO₂ 45/55 (Gew.-%) und SiO₂/ZrO₂ 70/30 (Gew.-%). Dabei wurde im zweiten Reaktor (PTFE-Schlauch) anstelle von Tetraisopropylorthotitanat Zirconium(IV)butoxid eingesetzt. Für den Start der Gelierung wurde dem Präsol kontinuierlich Essigsäure (1 mol/l, V = 15,6 % V_{Präsol}) zugefügt. Nach einer Verweilzeit von vier Tagen in den geschlossenen Formen wurden die Deckel der Formen entfernt und die Formen in verschließbare Trocknungsbehälter überführt. Zur kontrollierten Abgabe der Lösungsmittel enthielten die Trocknungsbehälter kleine Öffnungen (Durchmesser 0,1-4,0 mm) während für die Atmosphärenkontrolle eine Flüssigkeit zugegeben wurde (Wasser oder eine Mischung aus Ethanol, 1-Butanol, Formamid und Wasser). Anschließend wurden die Gelkörper innerhalb der Formen im Verlauf von vier Tagen getrocknet, wobei die Temperatur von Raumtemperatur auf 120 °C erhöht wurde. Die Xerogele wurden anschließend im vorgeheizten Sinterofen über den folgenden Temperaturverlauf zum Glas gesintert: 100 bis 800 °C (7 h), 800 °C (0,5 h), 800 bis 1.030 °C (4,6 h), 1.030 °C (1 h).

## Patentansprüche

1. Kontinuierliches Sol-Gel-Verfahren zur Herstellung von silicathaltigen Gläsern und Glaskeramiken, umfassend die folgenden Schritte:
(a) kontinuierliches Eindosieren eines Siliciumtetraalkoxids, eines Siliciumalkoxids mit wenigstens einer nicht alkoholischen funktionellen Gruppe und eines Alkohols in einen ersten Reaktor (R1) sowie wenigstens anteilige Hydrolyse durch Zugabe einer Mineralsäure unter Erhalt eines ersten Produktstroms (A);
(b) kontinuierliche Bereitstellung eines zweiten Produktstroms (B), in einem zweiten Reaktor (R2), durch Eindosieren einer Metallalkoxidkomponente oder kontinuierliches Vermischen eines Alkohols und einer Metallalkoxidkomponente;
(c) kontinuierliches Vermischen der Produktströme (A) und (B) in einem dritten Reaktor (R3) zur Erzeugung eines Präsols unter Erhalt eines dritten Produktstroms (C);
(d) kontinuierliche Zugabe von Wasser oder einer verdünnten Säure zum Produktstrom (C) unter Erhalt eines Sols (Gelierung);
(e) kontinuierliches Abfüllen des austretenden Sols in Formen unter Erhalt eines Aquagels;
(f) Trocknen der Aquagele unter Erhalt von Xerogelen;
(g) Sinterung der Xerogele unter Erhalt von silicathaltigen Gläsern oder Glaskeramiken

2. Verfahren nach Anspruch 1, **dadurch gekennzeichnet, dass** man im Schritt (a) Siliciumalkoxide einsetzt, die der Formel (I) folgen
Si(O*R*)₄ (I)
in der R für einen Alkylrest mit 1 bis 6 Kohlenstoffatomen steht.

3. Verfahren nach den Ansprüchen 1 und/oder 2, **dadurch gekennzeichnet, dass** man im Schritt (a) als Siliciumalkoxid Tetraethylorthosilicat (TEOS) einsetzt.

4. Verfahren nach mindestens einem der Ansprüche 1 bis 3, **dadurch gekennzeichnet, dass** man im Schritt (a) als Mineralsäure Salpetersäure einsetzt.

5. Verfahren nach mindestens einem der Ansprüche 1 bis 4, **dadurch gekennzeichnet, dass** man im Schritt (a) bezogen auf die Siliciumalkoxide 1 bis 60 Gew.-% Mineralsäure einsetzt.

6. Verfahren nach mindestens einem der Ansprüche 1 bis 5, **dadurch gekennzeichnet, dass** man im Schritt (a) die Hydrolyse der Siliciumalkoxide bei einer Temperatur im Bereich von 1 bis 100 °C durchführt.

7. Verfahren nach mindestens einem der Ansprüche 1 bis 6, **dadurch gekennzeichnet, dass** man im Schritt (b) als Metallalkoxidkomponente Alkylorthotitanate einsetzt.

8. Verfahren nach mindestens einem der Ansprüche 1 bis 7, **dadurch gekennzeichnet, dass** man im Schritt (b) als Metallalkoxidkomponente Zirconium(IV)alkoxide einsetzt.

9. Verfahren nach mindestens einem der Ansprüche 1 bis 8, **dadurch gekennzeichnet, dass** man die Produktströme (A) und (B) im Volumenverhältnis Alkoxid zu Kieselsäure von 10 : 1 bis 1 : 10 vermischt.

10. Verfahren nach mindestens einem der Ansprüche 1 bis 9, **dadurch gekennzeichnet, dass** man die Produktströme (A) und (B) bei Temperaturen im Bereich von 0 bis 80 °C vermischt.

11. Verfahren nach mindestens einem der Ansprüche 1 bis 10, **dadurch gekennzeichnet, dass** man wenigstens einen der Schritte (a), (b) oder (c) in einem Durchflussreaktor, gegebenenfalls mit vorgeschaltetem Mischelement durchführt.

12. Verfahren nach Anspruch 11, **dadurch gekennzeichnet, dass** man Durchflussreaktoren einsetzt, die eine Länge von 1 cm bis 1.000 m und/oder einen Querschnitt von 1 bis 10 mm aufweisen.

13. Verfahren nach mindestens einem der Ansprüche 1 bis 12, **dadurch gekennzeichnet, dass** man die Gelbildung bei Temperaturen im Bereich von 0 bis 100 °C durchführt.

14. Verfahren nach mindestens einem der Ansprüche 1 bis 13, **dadurch gekennzeichnet, dass** man die Trocknung bei Temperaturen im Bereich von 0 bis 150 °C durchführt.

15. Silicathaltige Gläser oder silicathaltige Glaskeramiken erhältlich nach einem der vorgenannten Verfahren nach einem der Ansprüche 1 bis 14.
